# EUROPÄISCHE PATENTSCHRIFT

(11) **EP 1 376 940 B1**
(45) Veröffentlichungstag und Bekanntmachung des Hinweises auf die Patenterteilung: **29.09.2004**
(21) Anmeldenummer: 03090168.0
(22) Anmeldetag: 02.06.2003
(51) Int. Cl.: H04L 12/28, H04Q 7/22, H04L 12/56

(54) **Verfahren zur Datenübertragung**
Method for data transmission
Procédé pour la transmission de données

(30) Priorität: 20.06.2002 DE 10228075
(43) Veröffentlichungstag der Anmeldung: 02.01.2004
(73) Patentinhaber: SIEMENS AKTIENGESELLSCHAFT, 80333 München (DE)
(72) Erfinder: Buhtz, Stephan, 12487 Berlin (DE); Stein, Fabrice, 12621 Berlin (DE); Kendelbacher, Detlef, 13129 Berlin (DE)

(56) Entgegenhaltungen:
- WO-A-00/74344
- WO-A-02/35863
- US-A- 5 680 400

## Beschreibung

Die Erfindung betrifft ein Verfahren zur Datenübertragung gemäß dem Oberbegriff des Anspruches 1.

Die Datenübertragung zwischen mobilen und ortsfesten Teilnehmern über Mobilfunknetze gewinnt insbesondere bei den Eisenbahnen zunehmende an Bedeutung. Neben zeitkritischen Anwendungen wie z. B. der Zugsteuerung mit Funkdatenübertragung gibt es weitere mobile Anwendungen im Bahnbereich mit Datenübertragungsbedarf. Als Beispiele seien hier die Diagnoseübertragung, die Bilddatenübertragung, die Platzreservierungsdatenübertragung und die Maildatenübertragung von Zügen zu ortsfesten Einrichtungen genannt. Oft bestehen für solche Daten keine hohen Anforderungen an die Übertragungszeit, dafür aber z. B. Anforderungen an Datendurchsatz, vollständige und reihenfolgerichtige Übertragung und Robustheit des Übertragungsverfahrens gegenüber Nutzdatenkanalwechseln - Applikations-Handover - Funknetzstörungen und -ausfällen. Weiterhin gibt es Anforderungen an den effektiven Umgang mit Übertragungsressourcen, z. B. Funk-Frequenzen und Mobilgeräte, da diese nicht beliebig vermehrbar sind.

Im Bereich der Zugsteuerungssysteme wurden europäisch abgestimmte Normen und Standards gesetzt. Das ETCS (European Train Control System) nutzt für die Zugsteuerung den GSM-Standard und verbindungsorientierte Datenservices. Bei dieser Funkkommunikation werden diskontinuierlich bestehende Kommunikationskanäle zwischen Zügen und ihren Steuerungszentralen eingerichtet. Die Ursache für die Diskontinuität liegt dabei weniger in Funkausfällen begründet, als in der regelmäßig wechselnden Funkverbindung zwischen Zügen und ihren lokalen Steuerungszentralen. Da diese Funkkanäle erhebliche freie Übertragungskapazität besitzen, besteht die Möglichkeit, die freie Übertragungskapazität dieser diskontinuierlichen Funkkanäle für die Übertragung von Daten anderer mobiler Applikationen bereitzustellen. Die Voraussetzungen dafür wurden mit dem ETCS-Standard geschaffen.

Transaktionsorientierte Übertragungsverfahren sind für mobile Bahnanwendungen mit Digitalfunk bisher nicht eingesetzt worden. Die derzeit verfügbaren verbindungsorientierten Datenkanäle erfüllen die oben genannten Anforderungen nur teilweise und mit zusätzlichen Verbrauch an Übertragungsressourcen. Mobile Mail- und Paketdienste stehen den Bahnen im GSM derzeit nicht zur Verfügung. Aus diesem Grund sind die auf digitalen Funknetzen basierenden mobilen Datendienste im Bahnbereich bisher kaum entwickelt worden.

Im Dokument WO 00/74344 werden Radio Link Protocol (RLC) Segmente verschiedener Länge gebildet und mit Hilfe einer Block-Sequenznummer und einer Data-Byte-Sequenznummer effektives übertragen.

Der Erfindung liegt die Aufgabe zugrunde, ein transaktionsorientiertes Übertragungsverfahren der gattungsgemäßen Art für diskontinuierliche Übertragungsstrecken anzugeben.

Die Aufgabe wird durch die kennzeichnenden Merkmale des Anspruches 1 gelöst.

Das erfindungsgemäße Verfahren beschreibt die technischen Merkmale einer transaktionsorientierten Datenübertragung über diskontinuierliche Kommunikationskanäle von mobilen Einheiten zu ortsfesten Einrichtungen. Das Verfahren ist in der Lage, nicht zeitkritische Daten, d. h. Daten, für die keine maximale Übertragungszeit garantiert werden kann, verschiedener mobiler Quellen - Absender - derart aufzubereiten und zu übertragen, dass diese Daten trotz diskontinuierlicher Übertragungskanäle vollständig und reihenfolgerichtig beliebige Ziele - Empfänger - im Festnetz erreichen. Die Daten können dabei im Multiplex und mit geringerer Priorität zusammen mit zeitkritischen hochprioren Daten, z. B. Zugsteuerungsdaten, über einen oder mehrere verbindungsorientierte Datenkanäle übertragen werden.

Das transaktionsorientierte Übertragungsverfahren verläuft beim mobilen Teilnehmer - Absender - und beim ortsfesten Teilnehmer - Empfänger - in jeweils zwei Stufen. In der ersten Stufe erfolgt die Aufbereitung und Anpassung der Daten auf Applikationsebene, während die zweite Stufe des Verfahrens die Aufbereitung und Anpassung der Daten auf Übertragungsebene beinhaltet. Angepasst an die zweitstufige Datenaufbereitung gibt es ein zweistufiges Adressierungsverfahren, welches aus der Adressierung auf Applikationsebene und der Adressierung auf Übertragungsebene besteht.

Das erfindungsgemäße Verfahren ermöglicht die Übertragung von Daten verschiedener Applikationen eines mobilen Teilnehmers zu einem oder mehreren Zielen im Festnetz, wobei bei Bedarf die vollständige und reihenfolgerichtige Übertragung von Applikationsdaten gewährleistet ist. Für die Übertragung werden nur diskontinuierlich bestehende Kanäle benötigt. Komplexe Applikationsdaten können verteilt über mehrere nacheinander bestehende Funkkanäle übertragen werden. Gegebenenfalls können Applikationsdaten auch über unterschiedliche Übertragungsmedien übertragen werden. Die diskontinuierlich bestehenden Funkverbindungen können zu verschiedenen Teilnehmern im Festnetz bestehen. Ein direkter Funkkanal zum Ziel ist nicht nötig. Damit können zeitweise eingerichtete Funkkanäle zu ortsfesten Instanzen für die Datenübertragung im Rahmen des beschriebenen Verfahrens mitbenutzt werden. Kanalbrüche, u. a. durch Handover oder Kanalfehler, werden toleriert. Die verwendeten Kanäle für die Datenübertragung können fehlerbehaftet sein. Durch geeignete Fehlerkorrekturmechanismen sichert das Verfahren ein robustes Verhalten in gestörten Kanälen. Durch eine angepasste Segmentierung der Daten können die Eigenschaften des Übertragungskanals berücksichtigt werden, so dass Übertragungsfehler minimiert werden. Es können mehrere Kanäle für die Übertragung gleichzeitig benutzt werden - Multiplexing. Dabei können gleiche oder verschiedene Übertragungsmedien zur Anwendung kommen. Mittels Prioritätensteuerung können die zu übertragenen Applikationsdaten entsprechend den Applikationsanforderungen bevorzugt werden. Durch die Vorverarbeitung und Aufbereitung der zu übertragenden Daten in Abhängigkeit von Applikationsanforderungen erfolgt eine Optimierung von Durchsatz und Delay der Datenübertragung. Die diesbezüglichen Algorithmen sind frei definierbar.

Vorteilhafte Weiterbildungen und Ausführungsformen sind in den Unteransprüchen angegeben.

Nachfolgend wird die Erfindung anhand figürlicher Darstellungen näher erläutert. Es zeigen
- Figur 1: eine Prinzipdarstellung eines transaktionsorientierten Übertragungsverfahrens und
- Figur 2: ein Maildatenübertragungsverfahren.

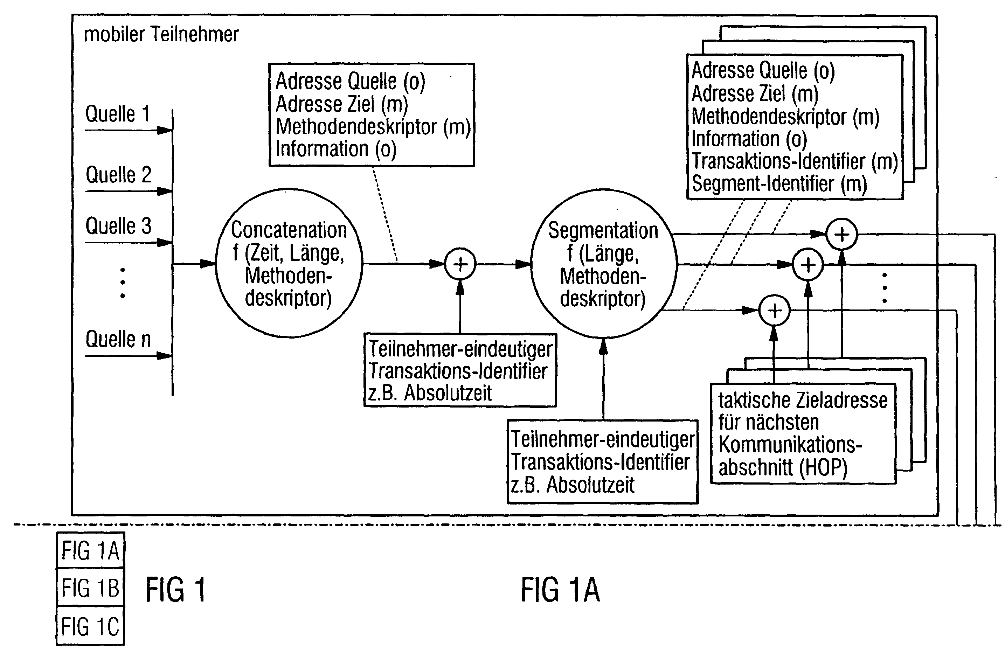

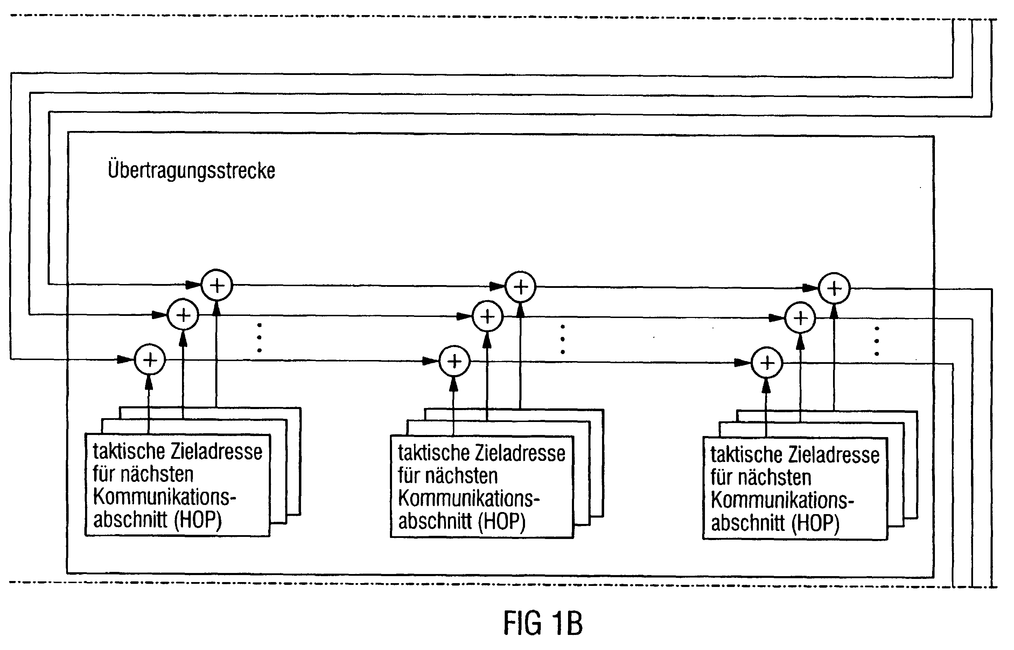

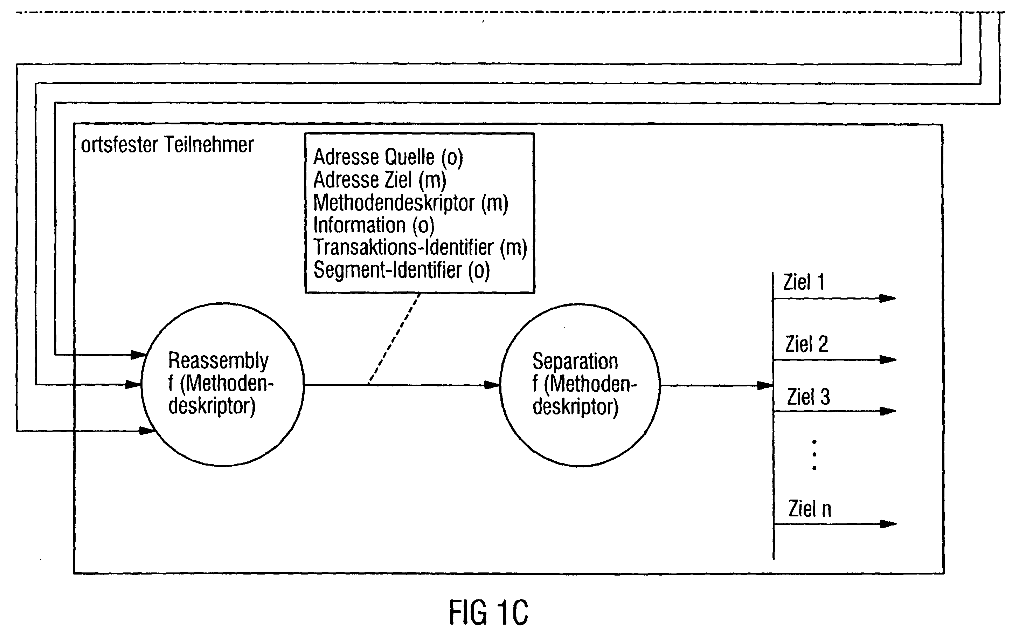

Der mobile Teilnehmer gemäß Figur 1 hat eine oder mehrere Datenquellen - Applikationen -, deren Daten mittels transaktionsorientierter Übertragung an einen ortsfesten Teilnehmer Übermittelt werden sollen. Der zeitliche Abstand der Applikationsdaten, deren Länge und Verteilung auf die verschiedenen Quellen ist dabei variabel. Ein zur Transaktion übergebenes Applikationsdatenpaket enthält folgende Angaben.
1. Die Adresse der mobilen Datenquelle. Diese Adresse ist applikationsbezogen und kann z. B. ein Applikations-Identifier der mobilen Applikation sein. Die Angabe der Adresse der Datenquelle ist optional (o).
2. Die Adresse des ortsfesten Zieles. Diese Adresse ist applikationsbezogen und kann z. B. ein Applikations-Identifier der ortsfesten Applikation sein.
3. Einen Methodendeskriptor. Der Methodendeskriptor beschreibt ein Profil der zu verwendenden Methode für die Vorverarbeitung und der zu verwendenden Übertragungsdienste für die Übertagung der Applikationsdaten.
4. Die zu übertragenen Applikationsdaten - Nutzdatenpakete. Die Übergabe von Applikationsdaten ist optional (o). Wenn z. B. nur das Auftreten eines Ereignisses übermittelt werden soll, benötigt die Zielapplikation ggf. keine Nutzdaten.

Zur Übertragung übergebene Nutzdatenpakete durchlaufen zunächst die erste Stufe der Aufbereitung im mobilen Teilnehmer. Diese besteht in folgenden Aktivitäten:
1. Verkettung der Nutzdatenpakete zum Transaktionsdatenblock mit methodenabhängiger Vorverarbeitung: Die Verkettung sorgt für die Bildung von transaktionsangepassten Datenblöcken. Bei der Verkettung können mehrere Nutzdatenpakete einer oder mehreren Quellen zu einem Transaktionsdatenblock zusammengestellt werden. Weiterhin können Nutzdatenpakete während der Verkettung nach bestimmten festgelegten Methoden vorverarbeitet werden. Die benutzten Methoden können je Applikation und benötigtem Übertragungsverhalten unterschiedlich sein - Multimethodenansatz Beispiele dafür sind 1. Informationsanordnung von Bilddaten in Teilmengen, beginnend mit dem Basisbild geringster Auflösung und nachfolgenden Detailinformationen zur Erhöhung der Bildauflösung bis zum Maximum der Auflösung, 2. das Überschreiben von veralteten Prozessgrößen bei Eintreffen von aktuelleren Werten, 3. prioritätsabhängige Umordnung von wartenden verketteten Prozessdaten.
   Die Verkettung ist von folgenden Einflüssen abhängig:
   a) Zeit: die Verkettung der Nutzdatenpakete zu einem größeren Transaktionsdatenblock kann mit einer bestimmten Verzögerungsdauer verbunden sein. Nach einem ersten übergebenen Nutzdatenpaket kann bis zu einer definierten maximalen Wartezeit auf weitere Nutzdatenpakete gewartet werden. Treffen innerhalb der Wartezeit weitere Nutzdatenpakete ein, werden diese in den Transaktionsdatenblock integriert. Treffen keine weiteren Nutzdatenpakete innerhalb der Wartezeit ein, wird die Verarbeitung des Transaktionsdatenblocks mit den vorhandenen Daten fortgesetzt.
   b) Methodendeskriptor: entsprechend dem von der Applikation benutzten Methodendeskriptor erfolgt die Verkettung der Nutzdatenpakete zum Transaktionsdatenblock mit methodenabhängiger Vorverarbeitung

   Die Größe des abgebildeten Transaktionsdatenblockes hängt somit von der Anzahl und der Länge der übergebenen Nutzdaten in einem definierten maximalen Zeitintervall, von der Maximallänge der übergebenen Nutzdaten und vom Methodendeskiptor der übergebenen Nutzdateninformationen ab. Das Ziel der Verkettung ist die Erfüllung der Anforderungen der Applikationen, z. B. bezüglich Durchsatz und Übertragungsverzögerung. Im Ergebnis der Verkettung entstehen Transaktionsdatenpakete mit folgenden Informationen:
   1. Adresse der Quelle (optional)
   2. Adresse des Zieles
   3. Methodendeskriptor
   4. Verkettete Nutzdaten (optional)
2. Bereitstellung eines Transaktions-Identifiers: je Transaktion wird ein eindeutiger Transaktions-Identifier benutzt, aus dem eine eindeutige Reihenfolge aller Transaktionen von einem bestimmten mobilen Teilnehmer zu einem ortsfesten Teilnehmer hervorgeht. Der Transaktions-Identifier kann beispielsweise aus einem Zeitstempel mit Absolutzeit bestehen. Der Transaktions-Identifier wird für die laufende Transaktion ermittelt und zusammen mit dem Transaktionsdatenblock für die zweite Stufe der Datenaufbereitung bereitgestellt.

In der zweiten Stufe erfolgt die Anpassung des Transaktionsdatenpaketes an das Übertragungssystem. Dieses beinhaltet folgende Aktivitäten:
1. Segmentieren des Transaktionsdatenpaketes. Das Transaktionsdatenpaket wird in übertragungsangepasste Segmente zerteilt. Die Segmentierung ist von der Länge des Transaktionsdatenpaketes und dem Methodendeskriptor abhängig. Entsprechend der Transaktionsdatenpaketlänge, einer definierten Segmentlänge und der applikationsseitig gewählten Methode wird das Transaktionsdatenpaket in Segmente zerschnitten.
   Jedes Segment erhält bei der Segmentierung als zusätzliche Informationen den in Stufe 1 bereitgestellten eindeutigen Transaktions-Identifier. Weiterhin erhält jedes Segment einen innerhalb der Transaktion eindeutigen Segment-Identifier. Dieser kann beispielsweise aus einer eindeutigen Sequenznummer bestehen. Transaktions-Identifier und Segment-Identifier werden an jedes Datensegment angehängt und mit diesem zusammen übertragen. Im Ergebnis der Aktivität entstehen die Übertragungspakete für die Übertragungsstrecke - Kommunikationsnetz. Ziel der Segmentierung ist die Aufteilung von Transaktionsdatenpaketen in Übertragungspakete, die der Charakteristik der Kommunikationsressourcen angepasst sind. Damit wird eine optimale Ausnutzung der diskontinuierlich verfügbaren und fehlerbehafteten Übertragungskanäle erreicht.
   Im Ergebnis der Segmentierung entstehen Übertragungspakete mit folgenden Informationen:
   1. Adresse der Quelle (optional)
   2. Adresse des Zieles
   3. Methodendeskriptor
   4. Segmentierte Nutzdaten (optional)
   5. Transaktions-Identifier
   6. Segment-Identifier
2. Bereitstellen der taktischen Zieladresse: Für die Übertragung im ersten Kommunikationsabschnitt, z. B. Funknetz, wird für jedes Übertragungspaket anhand der Zieladresse und der aktuell verfügbaren Kommunikationsressourcen die taktische Zieladresse ermittelt. Diese kann z. B. aus einer ISDN-Rufnummer, zu der ggf. gegenwärtig eine Verbindung existiert, bestehen. Verschiedenen Übertragungspaketen eines Transaktionsdatenpaketes können bei Bedarf - nacheinander oder gleichzeitig - verschiedene taktische Zieladressen zugeordnet werden. Damit können einerseits temporär bestehende Verbindungen und andererseits mehrere parallele Verbindungen gleichzeitig benutzt werden. Weiterhin können auch verschiedene Übertragungsmedien mit ggf. unterschiedlichen Adressierungsprinzipien nacheinander oder parallel unter Berücksichtigung der durch den Methodendeskriptor beschriebenen Randbedingungen für die Übertragung benutzt werden.

Die vom mobilen Teilnehmer generierten Übertragungspakete werden an die dazu ermittelten taktischen Zieladressen gesendet. Die taktischen Zieladressen sind spezifisch je Übertragungspaket und gelten für den nächsten Kommunikationsabschnitt (HOP). Ein Übertragungspaket stellt ein Segment einer Transaktion dar. Für die Übertragung können bestehende Kommunikationskanäle zu passenden taktischen Zieladressen mitbenutzt werden oder neue Kommunikationsverbindungen eingerichtet werden.

Die taktischen Zieladressen können ein Zwischenziel, z. B. ein Gateway, oder das globale Ziel, d. h. den ortsfesten Teilnehmer, für die Übertragung beschreiben. In einem Zwischenziel erfolgt anhand der globalen Zieladresse die Ermittlung der nächsten taktischen Zieladresse für den nächsten Kommunikationsabschnitt. Die abschnittsweise Übertragung und Ermittlung von neuen taktischen Zieladressen setzt sich fort, bis das Übertragungspaket den ortsfesten Teilnehmer, das globale Ziel, erreicht. Dabei können mehrere Teilabschnitte mit jeweils unterschiedlichen taktischen Adressen im Übertragungsweg liegen. Außerdem kann jedes Übertragungspaket einen unterschiedlichen Übertragungsweg mit unterschiedlicher Anzahl von Kommunikationsabschnitten durchlaufen. Der Weg der Übertragungspakete im Netz kann vom Ort des mobilen Teilnehmers, vom Verbindungs-, Last- und Fehlerzustand im Kommunikationsnetz und vom Ort des Zieles abhängen.

Die Übertragung in allen Übertragungsabschnitten erfolgt im Quittungsverfahren. Jedes Übertragungspaket wird sendeseitig solange zwischengespeichert, bis der Empfänger den korrekten Empfang quittiert hat. Erfolgt keine Empfangsquittung oder bricht der Übertragungskanal zusammen, können weitere Fehlerkorrekturmaßnahmen, wie die Verwendung einer alternativen taktischen Zieladresse, oder ein Verbindungsneuaufbau erfolgen. Solange keine positive Quittung über den Empfang eines Übertragungspaketes erfolgt ist, bleibt die Verantwortung für das Übertragungspaket beim Sender. Erst nach positiver Quittierung wird das Übertragungspaket sendeseitig gelöscht. Weitergehende Fehleroffenbarungsmaßnahmen infolge ausbleibender Quittierung hängen von der Ausprägung des konkreten Übertragungssystems ab.

Für jede Quelle des mobilen Teilnehmers gibt es ein zugeordnetes Ziel im ortsfesten Teilnehmer.

Eintreffende Datenpakete werden in umgekehrter Reihenfolge der Bearbeitung im mobilen Teilnehmer behandelt. Zuerst wird die Stufe zwei durchlaufen.

In Stufe zwei werden eintreffende Datenpakete anhand ihres Transaktions-Indentifiers, ihres Segement-Indentifiers und unter Berücksichtigung der durch den Methodendeskriptor beschriebenen Randbedingungen zu Transaktionsdatenpaketen zusammengestellt - reassembliert, Fall 1 - oder sofort an die Verarbeitung in Stufe eins - Fall 2 - weitergegangen.

Fall 1: Datenpakete werden entsprechen den Randbedingungen des Methodendeskriptors verarbeitet und reassembliert. Da die Reihenfolge der eintreffenden zu reassemblierenden Übertragungspakete variabel ist, muss in Stufe zwei bei Bedarf eine Herstellung der korrekten Reihenfolge der Segmente anhand des Segment-Identifiers erfolgen. Transaktions-Identifier, Segment-Identifier und Methodendeskriptoren werden aus den Übertragungspaketen entfernt. Das zusammengesetzte Transaktionsdatenpaket wird mit der Adresse der Quelle - optional - der Adresse des Zieles, dem Methodendeskriptor und dem Transaktions-Identifier ergänzt und an Stufe eins übergeben.

Fall 2: Datenpakete werden entsprechend den Randbedingungen des Methodendeskriptors als eigenständige Transaktionsdatensegmente verarbeitet. Das Transaktionsdatensegment wird mit der Adresse der Quelle - optional - der Adresse des Zieles, dem Methodendeskriptor, dem Transaktions-Identifier und dem Segment-Identifier an Stufe eins übergeben.

In Stufe eins erfolgt die Separation des Transaktionsdatenpaketes. Falls das Transaktionsdatenpaket im mobilen Teilnehmer aus mehreren Nutzdatenpaketen gebildet wurde, wird es durch die Separation wieder in mehrere Nutzdatenpakete zerlegt.

Aufgrund der variablen Reihenfolge bei der Übertragung der Transaktionsdatenpakete erfolgt in Abhängigkeit der durch den Methodendeskriptor gegebenen Randbedingungen in Stufe eins eine Kontrolle bzw. Korrektur der Sequenz der Transaktionsdatenpakete.

Die Nutzdatenpakete werden abschließend an die Ziele - Zielapplikation - geliefert.

Die Vollständigkeit der Nutzdatenpakete und deren Reihenfolgerichtigkeit wird durch das Verfahren garantiert, falls die durch den Methodendeskriptor gegebenen Randbedingungen die ursprüngliche Reihenfolge der Nutzdatenpakete fordern.

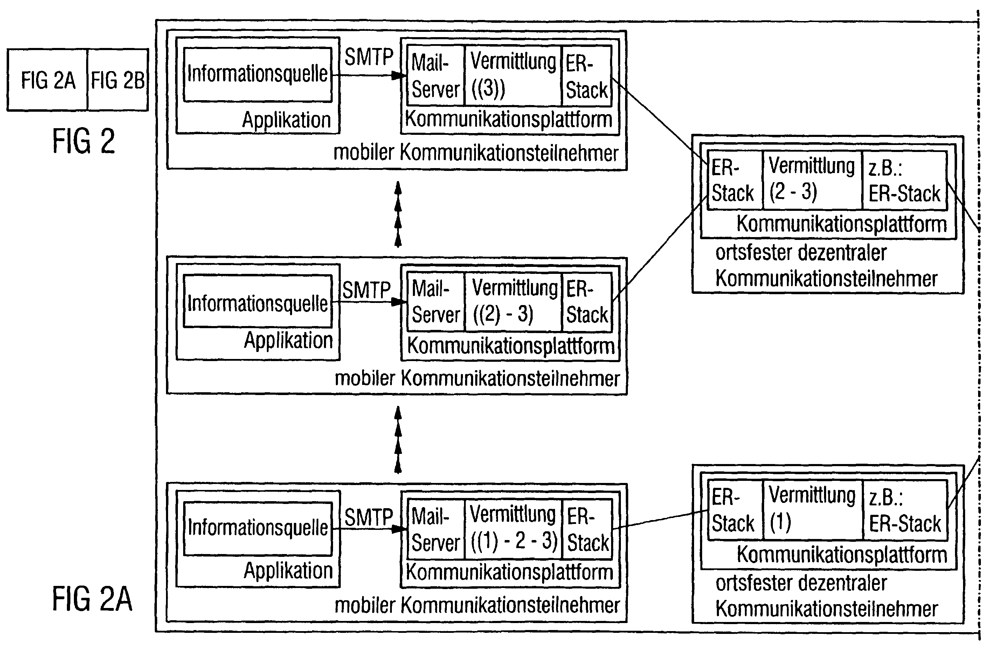

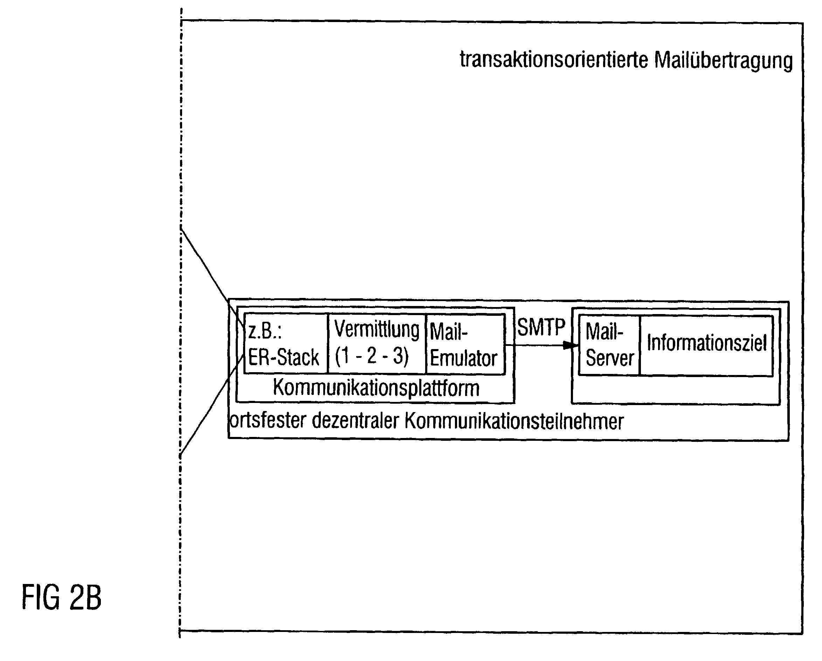

Figur 2 enthalt ein Beispiel für die Anwendung des erfindungsgemäßen Verfahrens bei der transaktionsorientierten Maildatenübertragung von Zügen zu ortsfesten Einrichtungen.

Bei der Zugsteuerung gemäß dem europäischen ETCS (Electronic Train Control System)-Standard kommunizieren Züge über ein Mobilfunknetz mit ihren lokal zuständigen ortsfesten dezentralen Steuerstellen. Dafür werden zeitweise Mobilfunkverbindungen zu den ortsfesten dezentralen Steuerstellen eingerichtet, über die Zugsteuerungsdaten übertragen werden. Als Datenübertragungsprotokoll wird der genormte EURORADIO-Stack - ER-Stack - verwendet.

Bei der beispielhaften Anwendung des erfindungsgemäßen Verfahrens werden in Zügen generierte Mailnachrichten über ein Standard-Maildienst - SMTP - an einen lokalen Mailserver im Zug geliefert. Der Mailserver übergibt die Mailnachrichten an die Vermittlung des mobilen Teilnehmers. In der Vermittlung werden die für die Stufen eins und zwei im mobilen Teilnehmer beschriebenen Aktivitäten des erfindungsgemäßen Verfahrens durchgeführt. Die entstehenden Datensegmente werden an den EURORADIO-Stack - ER-Stack - zur Funkübertragung übergeben. Die taktische Adresse entspricht dabei der lokal zuständigen dezentralen Steuerstelle, zu der gegenwärtig eine Mobilfunkverbindung besteht. Im EURORADIO-Stack - ER-Stack - werden die Datensegmente prioritätsgerecht gemeinsam mit den Zugsteuerungsdaten im Funkkanal übertragen.

In der Vermittlung der ortsfesten lokalen Steuerstelle erfolgt die erneute Vergabe einer taktischen Zieladresse, die in diesem Fall gleichzeitig die Zieladresse des ortsfesten Teilnehmers darstellt. Zur Übertagung im nächsten Abschnitt der Übertragungsstrecke, z. B. ISDN-Festnetz, werden die Daten an den nächsten Übertragungsprotokollstack, in diesem Fall ebenfalls der EURORADIO-Protokollstack - ER-Stack - übergeben. Die Verbindung wird für die Dauer der Übertragung der Datensegmente aufgebaut.

Bei ortsfesten Teilnehmern werden in der Vermittlung die Stufen zwei und eins entsprechend dem erfindungsgemäßen Verfahren durchgeführt. Dabei werden die über unterschiedliche Übertragungswege empfangene Datensegmente reihenfolgerichtig reassembliert und die Daten der verschiedenen Quellen separiert. Die aufbereiteten Applikationsdaten werden an einen Mail-Emulator übergeben, der diese mittels Standard-Maildienst - SMTP - an einen Mailserver liefert. Dort stehen die Nutzdaten für das Informationsziel zur Verfügung.

Die Erfindung beschränkt sich nicht auf das vorstehend angegebene Ausführungsbeispiel. Vielmehr ist eine Anzahl von Varianten dankbar, welche auch bei grundsätzlich anders gearteter Ausführung von den Merkmalen der Erfindung Gebrauch machen.

## Patentansprüche

1. Verfahren zur Datenübertragung von mindestens einem mobilen zu mindestens einem ortsfesten Teilnehmer über eine aus mehreren diskontinuierlichen Funk- und Festnetzabschnitten bestehende Übertragungsstrecke,
**dadurch gekennzeichnet,**
**dass** Daten von einer oder mehreren Quellen im mobilen Teilnehmer in zwei Stufen (Concatenation, Segmentation) aufbereitet werden, über die Übertragungsstrecke anhand einer globalen Zieladresse zielgerichtet zu ortsfesten Teilnehmern hin übertragen werden und nach einer weiteren zweistufigen Aufbereitung (Reassembly, Separation) an die adressierten Ziele in den ortsfesten Teilnehmern übermittelt werden, wobei
- im mobilen Teilnehmer in Stufe eins (Concatenation) eine transaktionsorientierte Datenaufbereitung in Abhängigkeit der Zeit, der Länge der Applikationsdaten und einer applikationsseitig wählbaren Verarbeitungsmethode erfolgt, ein Transaktions-Identifier der Datenaufbereitung ermittelt wird und die Daten im Ergebnis der Aufbereitung in Stufe eins mindestens Informationen über die Zieladresse im ortsfesten Teilnehmer und die angewendete Verarbeitungsmethode aufweisen,
- im mobilen Teilnehmer in Stufe zwei (Segmentation) eine segmentorientierte Datenaufbereitung in Abhängigkeit der Länge der Applikationsdaten und einer applikationsseitig wählbaren Verarbeitungsmethode erfolgt, ein Segment-Identifier ermittelt wird und die Daten im Ergebnis der Aufbereitung in Stufe zwei mindestens Informationen über die Zieladresse im ortsfesten Teilnehmer, die angewendete Verarbeitungsmethode, den in Stufe eins vergebenen Transaktions-Identifier sowie den Segmente-Identifier aufweisen,
- in einem ortsfesten Teilnehmer in Stufe zwei (Reassembly) eine segmentorientierte Datenaufbereitung in Abhängigkeit einer applikationsseitig wählbaren Verarbeitungsmethode erfolgen kann und die Daten im Ergebnis der Aufbereitung in Stufe zwei mindestens Informationen über die Zieladresse im ortsfesten Teilnehmer, die angewendete Verarbeitungsmethode und den Transaktions-Identifier aufweisen und
- in einem ersten ortsfesten Teilnehmer in Stufe eins (Separation) eine transaktionsorientierte Datenaufbereitung in Abhängigkeit einer applikationsseitig wählbaren Verarbeitungsmethode erfolgt und die Nutzdaten im Ergebnis dieser Aufbereitung an das korrekte Ziel übergeben werden.

2. Verfahren nach Anspruch 1,
**dadurch gekennzeichnet,**
**dass** die applikationsseitig wählbaren Verarbeitungsmethoden in den beiden Stufen im mobilen und im ortsfesten Teilnehmer frei definierbare Algorithmen enthalten, um Applikationsanforderungen wie Vollständigkeit, Reihenfolgerichtigkeit, Darstellbarkeit, Aktualität, Durchsatz, Delay usw. erfüllen zu können.

3. Verfahren nach einem der vorangehenden Ansprüche,
**dadurch gekennzeichnet,**
**dass** im mobilen Teilnehmer anhand der verfügbaren globalen Zieladresse und der verfügbaren diskontinuierlichen Übertragungsstrecke eine Ermittlung einer taktischen Zieladresse erfolgt und die Übertragungsdaten segmentweise an die taktische Zieladresse gesendet werden, wobei sowohl mehrere taktische Zieladressen gleichzeitig als auch nach einander benutzt werden können.

4. Verfahren nach einem der vorangehenden Ansprüche,
**dadurch gekennzeichnet,**
**dass** die Übertragungsstrecke aus einem oder mehrerer Übertragungsabschnitten (HOP) in einem oder mehreren Funk- und/oder Festnetzen besteht, wobei für jeden dieser Übertragungsabschnitte anhand der globalen Zieladresse eines Segmentes mindestens eine taktische Zieladresse ermittelt wird, so dass die Daten nach Durchlaufen der Übertragungsabschnitte zielgerichtet bei dem ortsfesten Teilnehmer eintreffen.

5. Verfahren nach Anspruch 3 oder 4,
**dadurch gekennzeichnet,**
**dass** die Korrektur von Datenübertragungsfehlern auf der Übertragungsstrecke durch wiederholtes Senden an die taktische Zieladresse oder an alternative taktische Zieladressen erfolgt.

6. Verfahren nach einem der Ansprüche 3 bis 5,
**dadurch gekennzeichnet,**
**dass** die Übertragung zu den taktischen Zieladressen verschiedene funk- und drahtgebundene Übertragungsmedien parallel oder nacheinander verwendet werden können.

7. Verfahren nach einem der vorangehenden Ansprüche,
**gekennzeichnet durch**
die Verwendung für Datenübertragungseinrichtungen im Bereich der Bahnkommunikation.

## Claims

1. Method for data transmission from at least one mobile station to at least one fixed-location station via a transmission link comprising a plurality of discontinuous radio and landline network sections,
**characterized**
**in that** data from one or more sources are conditioned in the mobile station in two stages (concatenation, segmentation), are transmitted to fixed-location stations directly via the transmission link using a global destination address, and, following further two-stage conditioning (reassembly, separation), are transmitted to the addressed destinations in the fixed-location stations, where
- transaction-oriented data conditioning takes place in the mobile station in stage one (concatenation) on the basis of the time, the length of the application data and a processing method which can be chosen in the application, a transaction identifier for the data conditioning is ascertained, and, as a result of the conditioning in stage one, the data at least comprise information about the destination address in the fixed-location station and the processing method used,
- segment-oriented data conditioning takes place in the mobile station in stage two (segmentation) on the basis of the length of the application data and a processing method which can be chosen in the application, a segment identifier is ascertained, and, as a result of the conditioning in stage two, the data at least comprise information about the destination address in the fixed-location station, the processing method used, the transaction identifier allocated in stage one and the segment identifier,
- segment-oriented data conditioning may take place in a fixed-location station in stage two (reassembly) on the basis of a processing method which can be chosen in the application, and, as a result of the conditioning in stage two, the data at least comprise information about the destination address in the fixed-location station, the processing method used and the transaction identifier, and
- transaction-oriented data conditioning takes place in a first fixed-location station in stage one (separation) on the basis of a processing method which can be chosen in the application, and, as a result of this conditioning, the user data are transferred to the correct destination.

2. Method according to Claim 1,
**characterized**
**in that** the processing methods which can be chosen in the application contain freely definable algorithms in the two stages in the mobile station and in the fixed-location station in order to be able to meet application demands such as completeness, correctness of order, representability, currency, throughput, delay etc.

3. Method according to one of the preceding claims,
**characterized**
**in that** a tactical destination address is ascertained in the mobile station using the available global destination address and the available discontinuous transmission link, and the transmission data are transmitted in segments to the tactical destination address, it being possible to use a plurality of tactical destination addresses both simultaneously and in succession.

4. Method according to one of the preceding claims,
**characterized**
**in that** the transmission link comprises one or more transmission sections (HOP) in one or more radio and/or landline networks, with at least one tactical destination address being ascertained for each of these transmission sections using the global destination address of a segment, so that the data arrive at the fixed-location station directly after having passed through the transmission sections.

5. Method according to Claim 3 or 4,
**characterized**
**in that** data transmission errors on the transmission link are corrected through repetitive transmission to the tactical destination address or to alternative tactical destination addresses.

6. Method according to one of Claims 3 to 5,
**characterized**
**in that** transmission to the tactical destination addresses may involve the use of various radio-based and wire-based transmission media in parallel or in succession.

7. Method according to one of the preceding claims,
**characterized by**
use for data transmission devices in the field of rail communication.

## Revendications

1. Procédé de transmission de données au moins d'un abonné mobile à au moins un abonné fixe par l'intermédiaire d'une voie de transmission constituée de plusieurs tronçons discontinus de réseaux radio et de réseaux du service fixe,
**caractérisé par le fait que**
des données sont préparées par une ou plusieurs sources dans l'abonné mobile en deux étapes (concaténation, segmentation), sont transmises via la voie de transmission à des abonnés fixes de façon ciblée à l'aide d'une adresse de destination globale et sont transmises après une autre préparation en deux étapes (réassemblage, séparation) aux destinations adressées dans les abonnés fixes,
- dans l'abonné mobile, dans l'étape un (concaténation), une préparation de données orientée sur les transactions étant effectuée en fonction du temps, de la longueur des données d'application et d'une méthode de traitement pouvant être choisie du côté de l'application, un identificateur de transaction de la préparation de données étant déterminé et les données en résultat de la préparation dans l'étape un comportant au moins des informations sur l'adresse de destination dans l'abonné fixe et la méthode de traitement utilisée,
- dans l'abonné mobile, dans l'étape deux (segmentation), une préparation de données orientée sur les segments étant effectuée en fonction de la longueur des données d'application et d'une méthode de traitement pouvant être choisie du côté de l'application, un identificateur de segment étant déterminé et les données en résultat de la préparation dans l'étape deux comportant au moins des informations sur l'adresse de destination dans l'abonné fixe, la méthode de traitement utilisée, l'identificateur de transaction prescrit dans l'étape un et l'identificateur de segment,
- dans un abonné fixe, dans l'étape deux (réassemblage), une préparation de données orientée sur les segments pouvant être effectuée en fonction d'une méthode de traitement pouvant être choisie du côté de l'application et les données en résultat de la préparation dans l'étape deux comportant au moins des informations sur l'adresse de destination dans l'abonné fixe, la méthode de traitement utilisée et l'identificateur de transaction, et
- dans un premier abonné fixe, dans l'étape un (séparation), une préparation de données orientée sur les transactions étant effectuée en fonction d'une méthode de traitement pouvant être choisie du côté de l'application et les données utiles en résultat de cette préparation étant transmises à la destination correcte.

2. Procédé selon la revendication 1,
**caractérisé par le fait que** les méthodes de traitement pouvant être choisies du côté de l'application dans les deux étapes dans l'abonné mobile et dans l'abonné fixe contiennent des algorithmes pouvant être librement définis pour pouvoir satisfaire à des conditions d'application comme l'intégralité, l'exactitude de la série ordonnée, la possibilité de présentation, l'actualité, le débit, le délai, etc..

3. Procédé selon l'une des revendications précédentes,
**caractérisé par le fait que**, dans l'abonné mobile, on effectue une détermination d'une adresse de destination tactique à l'aide de l'adresse de destination globale disponible et de la voie de transmission discontinue disponible et on émet les données de transmission par segments vers l'adresse de destination tactique, plusieurs adresses de destination tactiques pouvant être utilisées aussi bien simultanément que successivement.

4. Procédé selon l'une des revendications précédentes,
**caractérisé par le fait que** la voie de transmission est constituée d'un ou plusieurs tronçons de transmission (HOP) dans un ou plusieurs réseaux radio et/ou réseaux du service fixe, au moins une adresse de destination tactique étant déterminée pour chacun de ces tronçons de transmission à l'aide de l'adresse de destination globale d'un segment de telle sorte que les données, après avoir parcouru les tronçons de transmission, arrivent de façon ciblée à l'abonné fixe.

5. Procédé selon la revendication 3 ou 4,
**caractérisé par le fait que** la correction d'erreurs de transmission de données sur la voie de transmission s'effectue au moyen d'une émission répétée vers l'adresse de destination tactique ou vers des adresses de destinations techniques alternatives.

6. Procédé selon l'une des revendications 3 à 5,
**caractérisé par le fait que** la transmission vers les adresses de destination tactiques peut utiliser parallèlement ou successivement différents moyens de transmission par radio ou par fil.

7. Procédé selon l'une des revendications précédentes,
**caractérisé par** son utilisation pour des dispositifs de transmission de données dans le domaine de la communication ferroviaire.
